# EUROPEAN PATENT APPLICATION

(11) **EP 4 852 511 A1**
(43) Date of publication of application: **09.12.2026**
(21) Application number: 25751128.7
(22) Date of filing: 17.01.2025
(51) Int. Cl.: H04W 28/08

(54) **COMMUNICATION METHOD AND APPARATUS**

(30) Priority: 08.02.2024 CN 202410178208
(71) Applicant: HUAWEI TECHNOLOGIES CO., LTD., Shenzhen, Guangdong 518129 (CN)
(72) Inventor: WEN, Mengsha, Shenzhen, Guangdong 518129 (CN); LI, Hancheng, Shenzhen, Guangdong 518129 (CN); LI, Zhuoming, Shenzhen, Guangdong 518129 (CN)
(74) Representative: Körber, Martin Hans
(86) International application number: PCT/CN2025/073056
(87) International publication number: WO 2025/167526

(57) **Abstract**

A communication method and an apparatus are provided. The method includes: A first network element sends a first message to a third network element, where the first message is used by the first network element to request to recommend a policy corresponding to a first service; the third network element obtains first information, where the first information includes statistical information of at least one network element; and the third network element sends a first policy to the first network element based on the statistical information of the at least one network element, where the first policy includes the policy corresponding to the first service. The statistical information of the at least one network element includes information about the at least one network element invoking a service and/or information about a service of the at least one network element being invoked, and the at least one network element includes the first network element. In this method, services of network elements can be sensed, and signaling storms can be mitigated/prevented in time, thereby improving efficiency of mitigating the signaling storms.

## Description

### CROSS-REFERENCE TO RELATED APPLICATIONS

This application claims priority to Chinese Patent Application No. 202410178208.6, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

A network system includes a plurality of function network elements. A signaling storm may occur during interaction between function network elements or interaction between a function network element and another device, affecting normal service running of the device. For example, a plurality of core network elements in the network system interact with a same device. The device needs to simultaneously process an excessive amount of signaling, resulting in service interruption. For another example, after a network is recovered from interruption, various devices whose services are interrupted request to connect to the network again. There is an excessive amount of signaling requesting access to the network simultaneously, resulting in the devices failing to access the network.

Currently, control policies for signaling storms are mainly implemented at a network element level, which are insufficient in timeliness and have low efficiency in mitigating the signaling storms.

### SUMMARY

Embodiments of this application provide a communication method and an apparatus. Service-level control policies can be provided for signaling storms, so that the signaling storms can be mitigated/prevented in time, thereby improving efficiency of mitigating the signaling storms.

To achieve the foregoing objectives, the following technical solutions are used in embodiments of this application.

**According to a first aspect,** an embodiment of this application provides a communication method. The method may be performed by a first communication apparatus. The first communication apparatus may be a combined device, component, or the like configured to implement a function of a core network element. The first communication apparatus may be a third network element, and the third network element has a recommendation logical function (recommendation logical function, ReLF). Alternatively, the first communication apparatus is a unit/module, a circuit, a chip, or the like in a third network element. For example, the third network element is a network data analytics function (network data analytics function, NWDAF) network element having the ReLF, or the third network element may be an apparatus obtained by co-locating the ReLF and an analytics logical function (analytics logical function, AnLF) in an NWDAF. The following describes the method provided in the first aspect by using an example in which the first communication apparatus is the third network element.

The communication method includes: The third network element receives a first message from a first network element, and obtains first information, where the first message is used to request to recommend a policy corresponding to a first service, and the first information includes statistical information of at least one network element; and the third network element sends a first policy to the first network element based on the statistical information of the at least one network element, where the first policy includes the policy corresponding to the first service. The statistical information of the at least one network element includes information about the at least one network element invoking a service and/or information about a service of the at least one network element being invoked, and the at least one network element includes the first network element.

The first network element is a network element requesting to prevent or mitigate a signaling storm. When the first network element has a requirement for preventing or mitigating a signaling storm, the first network element may send the first message to the third network element. Triggered by the first message, the third network element may obtain the first information, where the first information is obtained by collecting statistics on information related to the at least one network element, or the first information includes the statistical information of the at least one network element. The statistical information of the at least one network element/the first information may be used to predict or determine whether a signaling storm occurs in the first network element. For example, the statistical information of the at least one network element includes the information about the at least one network element invoking the service and/or the information about the service of the at least one network element being invoked. In this way, the first policy generated by the third network element based on the statistical information of the at least one network element can prevent or mitigate the signaling storm. Information about each network element invoking a service or being invoked may be considered as service-related information of the network element, and it may be considered that the first policy is a service-level policy. According to this solution, services of network elements can be sensed. Therefore, recommended policies vary based on signaling overhead caused by different services. Compared with a signaling-level signaling storm control policy, this solution can mitigate/prevent signaling storms in time, thereby improving efficiency of mitigating the signaling storms.

In an implementation, the first message includes a recommendation identifier, where the recommendation identifier is an ID of a service requested to be recommended, so that the third network element determines the service to be recommended to the first network element.

In an implementation, the first message further includes a service scope of the first network element, identification information of the first network element, and network slice information of the first network element. Alternatively, the first message further includes a service scope of the first network element, identification information of a set to which the first network element belongs, and network slice information of the first network element.

The foregoing information may be understood as attribute information of the first network element. The third network element may obtain the first information based on the foregoing information, so that the first information matches the attribute information of the first network element, thereby obtaining a more appropriate first policy.

In an implementation, the first service includes invoking a service of a second network element, and the first message further includes information about at least one candidate network element, where the information about the at least one candidate network element indicates at least one of a type, a service scope, and slice information of the at least one candidate network element. The at least one candidate network element includes the second network element, and the at least one network element includes the at least one candidate network element.

The at least one network element is related to the first service. For example, the first service includes invoking the service of the second network element, and the at least one network element includes at least one candidate network element serving as the second network element. The at least one candidate network element is at least one second network element that the first network element expects the third network element to recommend. The first network element notifies the third network element of the information about the at least one candidate network element, and the third network element may obtain the at least one candidate network element based on the information about the at least one candidate network element, to recommend the second network element to the first network element from the at least one candidate network element based on the statistical information of the at least one network element. In this solution, network elements other than the at least one candidate network element do not need to be considered, so that processing complexity can be reduced.

In an implementation, the first message further includes identification information of the at least one candidate network element.

The at least one candidate network element includes a network element that the first network element expects the third network element to recommend. The first network element notifies the third network element of the at least one candidate network element, to reduce statistical information that is of unnecessary network elements and obtained by the third network element.

In an implementation, the first service includes invoking the service of the second network element, and the method further includes: The third network element obtains the at least one candidate network element serving the first network element, where the at least one candidate network element includes the second network element, and the at least one network element includes the at least one candidate network element.

There are a plurality of second network elements that serve the first network element, and the first network element may expect one or more of the plurality of second network elements to provide services. When the first network element does not provide the at least one candidate network element for the third network element, the third network element may first determine the at least one candidate network element, to reduce obtained statistical information of unnecessary network elements.

In an implementation, the first message includes the information about the at least one candidate network element, the information about the at least one candidate network element indicates the at least one of the type, the service scope, and the slice information of the at least one candidate network element, and that the third network element obtains the at least one candidate network element includes: The third network element sends a second message, and receives at least one piece of identification information. The second message is used to request to obtain the at least one candidate network element, and may include the information about the at least one candidate network element. The at least one piece of identification information is in one-to-one correspondence with the at least one candidate network element, and the at least one piece of identification information is determined based on the information about the at least one candidate network element.

Optionally, that the third network element sends the second message includes that the third network element sends the second message to a network repository function (network repository function, NRF) network element. Because the NRF network element knows information about the second network element that can serve the first network element, when the third network element needs to obtain the at least one candidate network element, the third network element may request, from the NRF network element, a candidate network element that matches the attribute information.

Optionally, that the third network element sends the second message includes that the third network element sends the second message to another first network element, where the another first network element and the first network element that sends the first message belong to a same set. For example, the first network element that sends the first message is a first network element A, the third network element may send the second message to a first network element B, and the first network element A and the second network element B correspond to a same set (Set) identifier (identifier, ID).

In an implementation, that the third network element obtains the first information includes: The third network element sends a third message to a data analytics network element, where the third message is used to request to obtain the first information, and the first message includes an analytics ID, to indicate an analytics service that the third network element requests to obtain. The data analytics network element may be an NWDAF or an AnLF in an NWDAF. When the third network element is an ReLF and is independent of the NWDAF or the AnLF, that the third network element sends the third message may be that the third network element sends the third message to the NWDAF or the AnLF. When the third network element is an NWDAF network element, and the NWDAF network element includes an ReLF and an AnLF, that the third network element obtains the first information may be that the ReLF in the NWDAF obtains the first information from the AnLF in the NWDAF. Alternatively, when the third network element is obtained by co-locating an ReLF and an AnLF, that the third network element obtains the first information includes: The third network element obtains the statistical information of the at least one network element, and generates the first information based on the statistical information.

In an implementation, the statistical information of the at least one network element includes one or more of the following: a rate and/or a frequency of the at least one network element invoking the service in a first duration, prediction information of a rate and/or a frequency of the at least one network element being invoked in the first duration, or first time information. The first time information may indicate the first duration.

It may be understood that, prediction information of a rate and/or a frequency of a network element being invoked in a period of time may be used to predict an amount of signaling that needs to be exchanged by the network element in the period of time. Similarly, a rate and/or a frequency of invoking a service in a period of time may represent an amount of signaling exchanged by the network element in the period of time. The foregoing statistical information may represent an amount of signaling exchanged by the network element currently and/or in the future, and the first policy generated by the third network element based on the statistical information may be used to better prevent or mitigate the signaling storm.

**In** an implementation, the first information further includes one or more of the following: signaling storm prediction information and the analytics ID corresponding to the first information.

The signaling storm prediction information may indicate whether there is a signaling storm or severity of the signaling storm. In this way, the third network element may generate the matched first policy. For example, when there is no signaling storm, the first policy minimizes control over signaling, to ensure normal running of the first service. When there is a signaling storm, signaling is controlled by using the first policy, to reduce impact on normal services of the first network element.

**In** an implementation, the first service includes invoking the service of the second network element, and the first policy includes one or more of the following: a policy for selecting the second network element, a policy for invoking the service of the second network element, or a policy for a service of the first network element being invoked.

**In** an implementation, the first service includes a registration service of a terminal device, and the first policy includes one or more of the following: a time interval at which the terminal device re-attempts to register, and a policy for a service of the first network element being invoked.

**According to a second aspect,** an embodiment of this application provides a communication method. The method may be performed by a second communication apparatus. The second communication apparatus may be a combined device, component, or the like configured to implement a function of a core network element. The second communication apparatus may be a first network element, and the first network element is, for example, an access and mobility management function (access and mobility management function, AMF). Alternatively, a first communication apparatus is a unit/module, a circuit, a chip, or the like in a first network element. For example, the first network element is a unit/module, a circuit, a chip, or the like in the AMF. The following describes the method provided in the second aspect by using an example in which the second communication apparatus is the first network element.

The communication method includes: The first network element sends a first message to a third network element, and receives a first policy, where the first message is used to request to recommend a policy corresponding to a first service, the first policy includes the policy corresponding to the first service, the first policy is determined based on statistical information of at least one network element, the at least one network element is related to the first service, and the statistical information of the at least one network element includes information about the at least one network element invoking a service and/or information about a service of the at least one network element being invoked.

In an implementation, the first message includes a recommendation identifier, and the recommendation identifier is an ID of a service requested to be recommended.

In an implementation, the first message further includes a service scope of the first network element, identification information of the first network element or identification information of a set to which the first network element belongs, and network slice information of the first network element.

In an implementation, the first service includes invoking a service of a second network element, the first message further includes information about at least one candidate network element, the information about the at least one candidate network element indicates at least one of a type, a service scope, and slice information of the at least one candidate network element, and the at least one candidate network element includes the second network element.

In an implementation, the first message further includes identification information of the at least one candidate network element.

In an implementation, the first service includes invoking the service of the second network element, and the first policy includes one or more of the following: a policy for selecting the second network element, a policy for invoking the service of the second network element, or a policy for a service of the first network element being invoked.

In an implementation, the first service includes a registration service of a terminal device, and the first policy includes one or more of the following: a time interval at which the terminal device re-attempts to register, or a policy for a service of the first network element being invoked.

In an implementation, the method further includes: The first network element sends registration policy information to the terminal device, where the registration policy information indicates the time interval at which the terminal device re-attempts to register.

For beneficial effects of the second aspect and the implementations, refer to the beneficial effects of the first aspect and the implementations of the first aspect. Details are not described herein again.

**According to a third aspect,** an embodiment of this application provides a communication method. The method may be performed by a third communication apparatus. The third communication apparatus may be a combined device, component, or the like configured to implement a function of a core network element. The third communication apparatus may be a fourth network element, or a first communication apparatus is a unit/module, a circuit, a chip, or the like in a fourth network element. For example, the fourth network element may be an AnLF network element. The fourth network element may be co-located with the ReLF network element in the first aspect. For example, both the fourth network element and the third network element are NWDAF network elements. The following describes the method provided in the third aspect by using an example in which the first communication apparatus is the fourth network element.

The communication method includes: The fourth network element receives a third message, and sends first information based on original data information obtained from a plurality of data sources. The third message is used to request the first information, the first information includes statistical information of at least one network element, and the statistical information includes information about the at least one network element invoking a service and/or information about a service of the at least one network element being invoked. The plurality of data sources includes a network management system, and the original data information indicates one or more of the following: load information, signaling storm prediction information, or a data source-level flow control policy of at least one of the data sources. The plurality of data sources include a first core network element, and the original data information indicates one or more of the following: one or more of a rate, a success rate, or a failure rate of the first core network element invoking a service; one or more of a rate, a success rate, or a failure rate of a service of the first core network element being invoked; a service type of the first core network element and/or a proportion of the service type of the first core network element in a plurality of service types; load and a status of the first core network element; or behavior information of a terminal device.

**According to a fourth aspect,** an embodiment of this application provides a communication apparatus. The communication apparatus has a function of implementing behavior in the method example in any one of the first aspect to the third aspect. For beneficial effects, refer to related descriptions of the first aspect to the third aspect. Details are not described herein again. For example, the communication apparatus may be the third network element in the first aspect, or the communication apparatus may be an apparatus that can support the third network element in implementing a function needed in the method provided in the first aspect. For example, the third network element may be an NWDAF network element, and the communication apparatus may be a chip or a chip system in the NWDAF network element; or the third network element may be an ReLF network element, and the communication apparatus may be a chip or a chip system in the ReLF network element. For another example, the communication apparatus may be the first network element in the second aspect, or the communication apparatus may be an apparatus that can support the first network element in implementing a function needed in the method provided in the second aspect. For example, the first network element is an AMF network element, and the communication apparatus may be a chip or a chip system in the AMF network element. For another example, the communication apparatus may be the fourth network element in the third aspect, or the communication apparatus may be an apparatus that can support the fourth network element in implementing a function needed in the method provided in the third aspect. For example, the third network element is an NWDAF network element, and the communication apparatus may be a chip or a chip system in the NWDAF network element; or the third network element is an AnLF network element, and the communication apparatus may be a chip or a chip system in the AnLF network element.

**In** a possible design, the communication apparatus includes a corresponding means (means) or module configured to perform the method according to any one of the first aspect to the third aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same function unit, the function unit is referred to as the transceiver unit, and the function unit can implement the sending function and the receiving function. Alternatively, the sending unit and the receiving unit may be different function units, and the transceiver unit is a general term for these function units. These units (modules) may execute corresponding functions in the method example in any one of the first aspect to the third aspect. For details, refer to detailed descriptions in the method example. Details are not described herein.

**According to a fifth aspect,** an embodiment of this application provides a communication apparatus. The communication apparatus may be the communication apparatus in the fourth aspect of the foregoing embodiments, or may be a chip or a chip system disposed in the communication apparatus in the fourth aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is caused to perform the method performed by the first network element, the third network element, or the fourth network element in the foregoing method embodiments.

**According to a sixth aspect,** an embodiment of this application provides a chip system. The chip system includes a processor, and may further include a communication interface, configured to implement the method according to any one of the first aspect to the third aspect. Optionally, the chip system further includes a memory. The memory is configured to store a computer program (may also be referred to as code or instructions). The processor is coupled to the memory and the communication interface. The processor is configured to invoke the computer program from the memory and run the computer program, to cause a device on which the chip system is installed to perform the method in any one of the first aspect to the third aspect and the possible implementations of the first aspect to the third aspect. The chip system may include a chip, or may include a chip and another discrete device.

**According to a seventh aspect,** an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the third aspect.

**According to an eighth aspect,** an embodiment of this application provides a communication system. The communication system includes a first network element, a second network element, and a third network element. The first network element is configured to implement a function of the method according to the second aspect, the second network element may provide services for the first network element, and the third network element is configured to implement a function of the method according to the first aspect. For example, the first network element is an AMF network element, the second network element is a session management function (session management function, SMF) network element, and the third network element is an NWDAF network element or an ReLF network element. Optionally, the communication system further includes a terminal device.

**According to a ninth aspect,** an embodiment of this application provides a computer-readable storage medium. The computer-readable storage medium is configured to store a computer program or instructions, and when the computer program or the instructions are run, the method according to any one of the first aspect to the third aspect and the implementations of the first aspect to the third aspect is implemented.

**According to a tenth aspect,** an embodiment of this application further provides a computer program product including instructions. When the computer program product is run on a computer, the method according to any one of the first aspect to the third aspect and the implementations of the first aspect to the third aspect is implemented.

For beneficial effects of the fourth aspect to the tenth aspect and the implementations of the fourth aspect to the tenth aspect, refer to beneficial effects of the first aspect and any implementation of the first aspect.

### BRIEF DESCRIPTION OF DRAWINGS

FIG. 1 is a diagram of a 5G network architecture according to an embodiment of this application;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a diagram of a structure of a communication apparatus according to an embodiment of this application; and
FIG. 6 is a diagram of another structure of a communication apparatus according to an embodiment of this application.

### DESCRIPTION OF EMBODIMENTS

In embodiments of this application, a policy for preventing or mitigating a signaling storm may be recommended based on a traffic status of each network element in a network system, so that signaling control is performed according to the policy. In this way, the signaling storm can be mitigated or even avoided in time, and service exceptions can be reduced. The traffic status of the network element includes traffic consumed by services of the network element, or may be traffic required for information exchange of the network element in the future. The following describes solutions provided in embodiments of this application with reference to accompanying drawings.

The technical solutions provided in embodiments of this application may be applied to a communication system related to the 3rd generation partnership project (the 3rd generation partnership project, 3GPP), for example, a long term evolution (long term evolution, LTE) communication system or a fifth generation (a fifth generation, 5G) mobile communication system, or may be applied to another next-generation mobile communication system, for example, a sixth generation (6G) communication system, or another similar communication system. The another similar communication system may include wireless fidelity (wireless fidelity, Wi-Fi), vehicle to everything (vehicle to everything, V2X), an internet of things (internet of things, IoT) system, a narrowband internet of things (narrowband internet of things, NB-IoT) system, or the like.

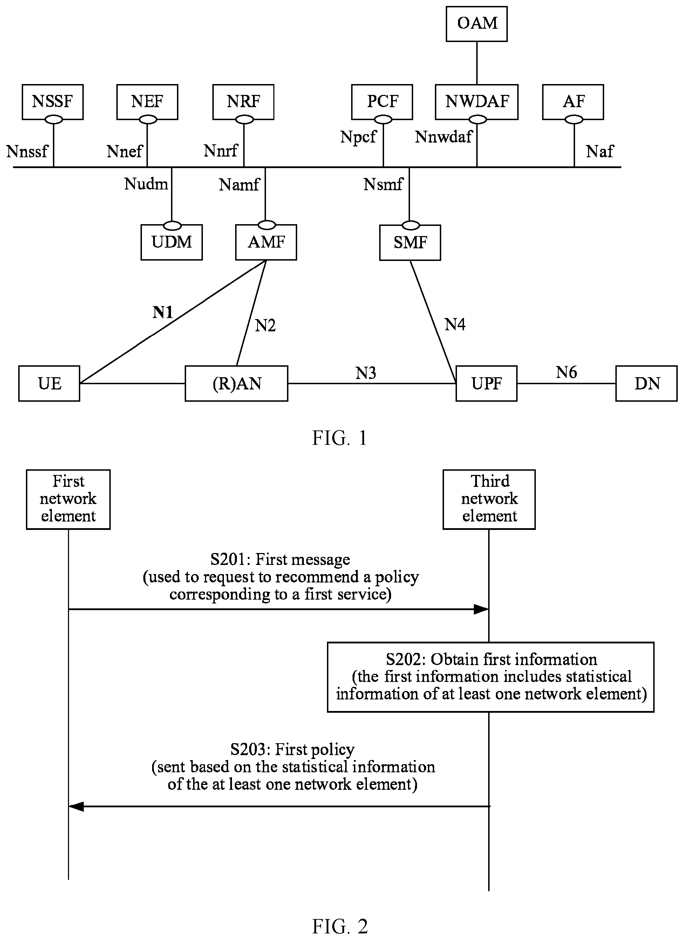

FIG. 1 is a diagram of a network architecture to which an embodiment of this application is applicable. The network architecture shown in FIG. 1 is a 5G network architecture based on a service-based architecture. FIG. 1 shows interaction relationships between network functions and entities and corresponding interfaces. For example, a user equipment (user equipment, UE) and an AMF may interact with each other through an N1 interface, and an interaction message is referred to as an N1 message (message). Network elements in FIG. 1 are network elements that communicate based on service-based interfaces, in other words, the network elements in FIG. 1 communicate with each other through the service-based interfaces. Some interfaces in FIG. 1 may be implemented by service-based interfaces. The network architecture includes three parts: a terminal device part, a data network (data network, DN) part, and an operator network part. The following briefly describes functions of some network elements in the network architecture.

The terminal device part includes a terminal device, and any device that can perform data communication with a base station may be considered as a terminal device. The terminal device is also referred to as a terminal or a terminal apparatus, and includes a UE, a mobile station, a mobile terminal, or the like. The terminal device may be widely used in various scenarios. For example, the terminal device may be a mobile phone, a computer, a mobile internet device (mobile internet device, MID), a wearable device, a virtual reality (virtual reality, VR) device, an augmented reality (augmented reality, AR) device, a station (station, STA), a robot arm, a camera, a robot, a vehicle, an uncrewed aerial vehicle, a helicopter, an airplane, a ship, a smart home device (for example, a television, an air conditioner, a floor sweeper, a sound box, or a set-top box), a relay (relay), a customer premises equipment (customer premises equipment, CPE), a smart car (a smart car or an intelligent car), or a roadside apparatus (roadside unit, RSU). Alternatively, the terminal device may be a terminal device in an IoT system, for example, a water meter or an electricity meter, or the like.

If the various terminal devices described above are located on a vehicle (for example, placed/mounted in the vehicle), the terminal devices may all be considered as vehicle-mounted terminal devices. The vehicle-mounted terminal device may be a vehicle-mounted module, a vehicle-mounted assembly, a vehicle-mounted component, a vehicle-mounted chip, or an on-board unit that is built in a vehicle as one or more components or units. The vehicle may implement methods in this application through the built-in vehicle-mounted module, vehicle-mounted assembly, vehicle-mounted component, vehicle-mounted chip, or on-board unit. The vehicle-mounted terminal device may be an entire vehicle device, a vehicle-mounted module, a vehicle, an on-board unit (on-board unit, OBU), a roadside unit (roadside unit, RSU), an in-vehicle infotainment system (or referred to as an in-vehicle sending unit) (telematics box, T-box), a chip, a system on chip (system on chip, SoC), or the like. The chip or the SoC may be installed in the vehicle, the OBU, the RSU, or the T-box.

The DN may also be referred to as a packet data network (packet data network, PDN), and is a network located outside the operator network. The operator network may access a plurality of DNs, and a plurality of services may be deployed on the DNs, to provide services such as data and/or voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like on the internal office network of the company.

The operator network may include a plurality of network function (network function, NF) network elements, for example, a network exposure function (network exposure function, NEF) network element, a network repository function (network repository function, NRF) network element, a policy control function (policy control function, PCF) network element, a unified data management (unified data management, UDM) network element, an application function (application function, AF) network element, an AMF network element, an SMF network element, a user plane function (user plane function, UPF) network element, an NWDAF network element, and a (radio) access network ((radio) access network, (R)AN). Certainly, the operator network may further include another function network element, for example, a network slice selection function (network slice selection function, NSSF) network element or an authentication server function (authentication server function, AUSF) network element. The "function network element" may also be replaced with a "function entity". Names of the foregoing network elements are defined only for ease of distinguishing between different functions, and should not constitute any limitation on this application. This application does not exclude a possibility that another name is used in a 5G network and another future network (for example, a 6G network). For example, in the 6G network, a part or all of the foregoing network elements may still use terms in 5G, or may use other names.

The terminal device may establish a connection to the operator network through an interface (for example, N1) provided by the operator network, and use services such as data and/or voice provided by the operator network. The terminal device may further access the DN through the operator network, and use an operator service deployed on the DN and/or a service provided by a third party. The third party may be a service party other than the operator network and the terminal device, and may provide other services such as data and/or voice for the terminal device. A specific representation form of the third party may be specifically determined based on an actual application scenario, and is not limited herein.

For ease of description, an example in which the (R)AN is referred to as a RAN is used below for description. The RAN is a subnet of the operator network, and is an implementation system between a service node in the operator network and the terminal device. To access the operator network, the terminal device first accesses the RAN, and then may be connected to the service node in the operator network via the RAN. A RAN device in this application is a device that provides a wireless communication function for the terminal device. The RAN may be a 3GPP-related cellular system, for example, a 5G/new radio (new radio, NR) mobile communication system, or a future-oriented evolved system (for example, a 6G mobile communication system). Alternatively, the RAN may be an open access network (open RAN, O-RAN, or ORAN), a cloud radio access network (cloud radio access network, CRAN), a virtual radio access network (virtualized RAN, vRAN), or the like. Alternatively, a RAN may be a communication system that integrates two or more of the foregoing systems. The RAN device may also be referred to as a RAN node, a RAN entity, an access node, or the like. In embodiments of this application, a network device is a radio access network (radio access network, RAN) device. In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in the 6G mobile communication system, a base station in a future mobile communication system, or the like. The RAN node may be a macro base station, a micro base station, an indoor base station, a relay node, a donor node/host node, a radio controller, or the like. Alternatively, the RAN node may be a server, a wearable device, a vehicle, a vehicle-mounted device, or the like. For example, a RAN node in a V2X technology may be a roadside unit (roadside unit, RSU). In another possible scenario, the RAN node may be a module or a unit that completes some functions of the base station; or a plurality of RAN nodes cooperate to assist the terminal device in implementing radio access, and different RAN nodes separately implement some functions of the base station. For example, the RAN node may be a central unit (central unit, CU), a distributed unit (distributed unit, DU), or a radio unit (radio unit, RU).

In the operator network, a part other than a (radio) access network part may be referred to as a core network part. The following briefly describes several core network elements in embodiments of this application.

The AMF network element may be referred to as an AMF for short, performs access management and mobility management of the UE, and is responsible for status maintenance of the UE, reachability management of the UE, non-mobility management (mobility management, MM), forwarding of a non-access stratum (non-access stratum, NAS) message, and forwarding of a session management (session management, SM) N2 message.

The SMF network element may be referred to as an SMF for short, performs session management on the UE, and allocates and releases a resource for a session of the UE. The resource includes session quality of service (quality of service, QoS), a session path, a forwarding rule, and the like. The SMF is responsible for selecting or reselecting a UPF, allocating an internet protocol (Internet protocol, IP) address, establishing, modifying, and releasing a bearer, and the like.

The UPF network element may be referred to as a UPF for short, supports all or a part of the following functions: interconnection between a protocol data unit (protocol data unit, PDU) session and a data network, packet routing and forwarding (for example, supporting uplink classifier (uplink classifier) on traffic and forwarding the traffic to a data network, and supporting a branching point (branching point) to support a multi-homed (multi-homed) PDU session), or data packet detection.

The NRF network element may be referred to as an NRF for short, and may be configured to: provide a network element discovery function, and provide, based on a request of another network element, network element information corresponding to a network element type, for example, address information and/or identification information, to implement on-demand configuration of a network function and a service and interconnection between NFs. The NRF network element further provides a network element management service, for example, service registration, service discovery, update, deregistration, and network element status subscription and push. Service registration means that an NF network element needs to register with the NRF network element before providing services. Service discovery means that when an NF network element needs another NF network element to serve the NF network element, the NF network element first needs to perform service discovery by using the NRF network element, to discover an expected NF network element that serves the NF network element. For example, when an NF network element 1 needs an NF network element 2 to serve the NF network element 1, the NF network element 1 first needs to perform service discovery by using the NRF network element, to discover the NF network element 2.

The NWDAF network element may be referred to as an NWDAF for short, is a network element that provides a data analytics function, and is mainly responsible for collecting network running data from some network elements included in a communication system, and analyzing the collected network running data. The NWDAF network element may collect data from a related network element based on an analytics request, analyzes the data, and sends an analytics result to a requester.

The NWDAF network element in embodiments of this application supports an artificial intelligence (artificial intelligence, AI)/machine learning (machine learning, ML) technology. An AI/ML model may be deployed on the NWDAF network element, and a corresponding function is implemented by using the AI/ML model. A device that "deploys" an AI/ML model may be a device that runs the AI/ML model. For example, "deploying" may also be understood as "running" or "using". The AI model is a specific implementation of an AI function, and the AI model represents a mapping relationship between an input and an output of the model. The AI model may be a neural network, a linear regression model, a decision tree model, a support vector machine (support vector machine, SVM), a Bayesian network, a Q-learning model, another machine learning model, or the like. In embodiments of this application, the AI function may include at least one of the following: data collection (collecting training data and/or inference data), data preprocessing, model training (or referred to as model learning), model information release (configuring model information), model verification (verifying a trained model), model inference (using the trained model for inference) or inference result release. Inference may also be referred to as prediction. Optionally, the AI model may include an ML model.

After collecting data from a related network element (for example, the AMF network element, the SMF network element, or the PCF network element), the NWDAF network element may train an AI model, perform data inference by using the AI model, and feed back an inference result to a corresponding requester. Based on different functions, NWDAF network elements may be classified into an NWDAF network element that supports training (namely, NWDAF (MTLF)) and an NWDAF network element that supports inference (namely, NWDAF (AnLF)). The NWDAF (AnLF) network element may request AI model information from the NWDAF (MTLF) network element, to perform data inference.

The NSSF network element may be referred to as an NSSF for short, and is mainly configured to select an appropriate network slice for a service of the terminal. A network slice identifier (or referred to as identification information) may include but is not limited to network slice selection assistance information (Network slice selection assistance information, NSSAI). Specifically, single network slice selection assistance information (Single Network slice selection assistance information, S-NSSAI) may be used to identify a single network slice, and the NSSAI may be used to identify a group of network slices (or referred to as a network slice group). One network slice group may include one or more network slices.

The UDM network element may be referred to as a UDM for short, is configured to manage a user subscription context, and is responsible for managing subscription data of the UE. When the subscription data is modified, the UDM network element is responsible for notifying a corresponding network element.

The UDR network element may be referred to as a UDR for short, is a unified data repository function, and is responsible for storing and retrieving subscription data, policy data, common architecture data, and the like, and may be used by a network element like the UDM, the PCF, or an NEF to obtain related data. The UDR can provide different data access authentication mechanisms for different types of data (for example, the subscription data and the policy data), to ensure data access security. The UDR needs to return a failure response with an appropriate cause value for an invalid service-based operation or data access request.

The AF network element mainly provides an application layer service, and further supports interaction with a 5G core network to provide a service, for example, affecting data routing decision and a policy control function, or providing some third-party services for a network side. In specific application, the AF network element may be a third-party server or an application server.

In FIG. 1, Nnef, Nnrf, Npcf, Nudm, Naf, Namf, Nsmf, Nnwdaf, N1, N2, N3, N4, and N6 are interface sequence numbers. For meanings of the interface sequence numbers, refer to meanings defined in the 3GPP standard protocol. This is not limited herein. The core network elements shown in FIG. 1 may be understood as network elements configured to implement different functions in the core network, for example, may be combined into a network slice as required. The core network elements may be independent devices, or may be integrated into a same device to implement different functions. Specific forms of the foregoing network elements are not limited in this application. Names of the interfaces between the network elements in FIG. 1 are merely examples. During specific implementation, the names of the interfaces may be other names. This is not specifically limited in this application.

The network architecture shown in FIG. 1 is merely an example, and there may be fewer or more terminal devices and/or network devices. The communication system described in embodiments of this application is intended to describe the technical solutions in embodiments of this application more clearly, but constitutes no limitation on the communication system to which embodiments of this application are applicable. For example, the communication system may further include another device, and the another device includes, for example, a network management network element/system like operation, administration, and maintenance (operation, administration, and maintenance, OAM) or a management data analytics function (management data analytics function, MDAF). The OAM/MDAF may be configured to: manage the core network element, for example, perform overall planning of flow control thresholds, and provide a network element-level signaling rate policy for the NF. A person of ordinary skill in the art may know that with evolution of the network architecture, the technical solutions provided in embodiments of this application are also applicable to a similar technical problem. When the technical solutions in embodiments of this application are applied to another communication system, the devices, components, modules, and the like in the embodiments may be replaced with corresponding devices, components, and modules in the another communication system. This is not limited.

As shown in FIG. 1, the network may include a plurality of NF network elements and another network element, for example, an access network device. Signaling overload may occur during interaction between NF network elements or between an NF network element and another device, affecting normal service running. For example, when one AMF simultaneously invokes services of a plurality of SMFs, the AMF may simultaneously process an excessive amount of signaling, and cannot process one or more pieces of signaling, causing service interruption. For another example, when a plurality of UEs initiate registration requests simultaneously or a plurality of UEs perform registration request procedures simultaneously, the AMF network element interacts with the plurality of UEs simultaneously, and the AMF may simultaneously process an excessive amount of signaling, causing UE registration interruption. In this case, the UE may initiate a registration request again. This process repeats, resulting some UEs consistently failing to register successfully.

A control policy for signaling storms is as follows: The network management system plans flow control thresholds and provides a network element-level control policy. The network element-level control policy is inefficient in controlling signaling storms and lacks timeliness.

In view of this, the solutions in embodiments of this application are provided. In embodiments of this application, an appropriate signaling storm prevention policy or signaling storm mitigation policy may be recommended based on statistical information (including service-related information) of each network element in a network. According to the solution provided in embodiments of this application, services of network elements can be sensed. Therefore, recommended policies vary based on signaling overhead caused by different services. Compared with a signaling-level signaling storm control policy, this solution can mitigate/prevent signaling storms in time, thereby improving efficiency of mitigating the signaling storms.

In embodiments of this application, recommending the signaling storm prevention policy or recommending the signaling storm mitigation policy may be implemented by an entity having a recommendation logical function. The entity may be referred to as an ReLF. The ReLF may be an independent function module. For example, the ReLF may be a function module newly added based on FIG. 1. The ReLF may alternatively be a part disposed in an existing network element or co-located with another function network element. For example, the ReLF is a function module in an NWDAF, and the NWDAF having the ReLF may be considered as an enhanced NWDAF. The ReLF may be replaced with an NWDAF (ReLF). When the ReLF serves as a function module of the NWDAF, the ReLF and an AnLF may be disposed independently, or may be co-located. A specific name of an apparatus obtained by co-locating the ReLF and the AnLF is not limited in embodiments of this application. For example, after the ReLF and the AnLF are co-located, the apparatus may also be referred to as an AnLF, and the AnLF has an ReLF function.

The NWDAF (ReLF) may communicate with an NWDAF (AnLF). For example, the NWDAF (ReLF) may obtain corresponding analytics and/or prediction information from the NWDAF (AnLF). For example, in embodiments of this application, the NWDAF (ReLF) may obtain statistical information of a plurality of NF network elements from the NWDAF (AnLF). It should be noted that the following third network element has an ReLF, and the third network element may be an NWDAF having an ReLF; or the third network element may be an NWDAF having an ReLF and an AnLF, where the ReLF and the AnLF are independently disposed, or the ReLF and the AnLF are co-located.

The following describes the solutions provided in embodiments of this application with reference to the accompanying drawings. In the following descriptions, an example in which the communication method provided in embodiments of this application is applied to the network architecture shown in FIG. 1 is used. The network architecture and the application scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new application scenarios, the technical solutions provided in embodiments of this application are also applicable to similar technical problems.

In embodiments of this application, "when", "as if", and "if' mean that an apparatus performs corresponding processing in an objective situation, and are not intended to limit time. The terms do not mean that the apparatus is required to have a determining action during implementation, and do not mean any other limitation. Unless otherwise specified, "if' and "as if' are interchangeable, "when" and "in the case of' are interchangeable, and "when" and "if'/"as if' are interchangeable.

In embodiments of this application, unless otherwise specified, a quantity of nouns represents "a singular noun or a plural noun", that is, "one or more". "At least one" means one or more, and "a plurality of' means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first network element and a second network element refer to two different network elements, and do not indicate different priorities, importance, or the like of the two network elements. For a type of technical feature, technical features in the type of technical feature are distinguished by using "A", "B", "C", "D", and the like, and there is no sequence or magnitude order between the technical features described by "A", "B", "C", and "D". For example, a policy A and a policy B in this specification are merely intended to distinguish between different policies, and do not limit a sequence or a magnitude order, a priority, importance, or the like of a manner A and a manner B.

The following describes the communication method provided in embodiments of this application from a perspective of interaction between a plurality of network elements. Steps performed by each network element may be implemented by the network element, or may be implemented by a component (a module like a chip, a processing unit, or a processor) in the network element. The plurality of network elements are all core network elements, for example, include a first network element and a third network element, and even other network elements such as the third network element and a terminal device.

FIG. 2 is a schematic flowchart of a communication method 200 according to an embodiment of this application. FIG. 2 describes the method from a perspective of interaction between a first network element and a third network element. It should be understood that the communication method 200 may alternatively be implemented by another apparatus, for example, a chip or a communication apparatus having a communication function. It should be noted that, in this embodiment of this application, that the method is performed by the first network element and the third network element is merely used as an example, and a quantity of network elements is not limited. For example, this embodiment of this application may alternatively be performed by more first network elements and more third network elements. When more first network elements are involved, all the more first network elements perform a same procedure. When more third network elements are involved, all of the more third network elements perform a same procedure. For another example, this embodiment of this application may alternatively be performed by another network element, for example, a fourth network element or a terminal device. The following first network element may invoke a service of a second network element, or a second network element may serve the first network element. For example, the first network element is an AMF, and the second network element is an SMF; or the first network element is an SMF, and the second network element is a UPF. The third network element may be an ReLF, or may be an NWDAF having an ReLF. Unless otherwise specified, the following policies are all policies for preventing or mitigating a signaling storm. As shown in FIG. 2, a procedure of the communication method 200 includes the following steps.

S201: The first network element sends a first message to the third network element, and correspondingly, the third network element receives the first message from the first network element.

The first message may be used to request to recommend a policy corresponding to a first service, and the policy may be used to prevent or mitigate a signaling storm. In a possible scenario, a signaling storm may occur in the first network element or has occurred in the first network element. In this case, that the first network element executes the first service according to an original policy may cause a signaling storm or aggravate a signaling storm, affecting normal running of the first service. Therefore, the first network element may send the first message to the third network element, to request to recommend the policy corresponding to the first service, to prevent and/or mitigate the signaling storm. In other words, the first message may be used by the first network element to request the third network element to recommend the policy for preventing and/or mitigating the signaling storm. A specific name of the first message is not limited in this embodiment of this application. For example, the first message may be referred to as a recommendation subscription request message or a recommendation policy request message.

For example, the first network element is an AMF, there are a plurality of SMFs that serve the AMF, and there are a plurality of SMFs that serve the AMF in a same period of time. For the AMF, a large amount of signaling needs to be exchanged in short time, and a signaling storm may occur or a signaling storm has occurred. In this case, the first network element may send the first message to the third network element. For another example, the first network element is an AMF. A plurality of terminal devices may initiate a registration procedure in a same period of time, and the AMF interacts with the plurality of terminal devices, which may cause a signaling storm or a signaling storm has occurred. In this case, the first network element may also send the first message to the third network element.

It may be understood that the third network element may provide a plurality of services for the first network element, for example, an analytics service and a recommendation service. In addition, there may be a plurality of analytics services, and there may also be a plurality of recommendation services. To cause the third network element to determine the service requested by the first network element, thereby avoiding providing a mismatched service for the first network element, the first message may include a recommendation ID, where the recommendation ID is an ID of a service requested to be recommended, to indicate the service requested by the first network element. A specific name of the recommendation ID is not limited in this embodiment of this application. For example, the first message is used to request to execute a recommendation policy of the first service. Recommendation policies of different services are different. From this perspective, the recommendation ID may also be referred to as a recommendation service ID, a policy type ID, or a recommendation type ID. Different IDs correspond to different recommendation types/recommendation services. A classification manner of the recommendation services/recommendation types is not limited in this embodiment of this application. For example, classification may be performed based on services. For example, a registration service of the terminal device corresponds to a recommendation type, and the first network element invoking the second network element corresponds to another recommendation type.

Content carried in the first message varies based on the first service. For example, the first service includes that the first network element invokes the service of the second network element, and the first message may carry one or more of the following information:

**Information A** is information about the first network element, for example, includes a service scope of the first network element, an ID of the first network element, and network slice information of the first network element. Alternatively, the information about the first network element may include a service scope of the first network element, an ID of a set to which the first network element belongs, and network slice information of the first network element. The network slice information includes a data network name (data network name, DNN) corresponding to a network slice, single network slice selection assistance information (single network slice selection assistance information, S-NSSAI), or the like.

For example, service scopes of different first network elements may be different. For example, a service scope of a first network element is a province, and a service scope of a first network element is a city or a district. Usually, a first network element having a relatively wide service scope may invoke more second network elements than a first network element having a relatively narrow service scope. For example, the first network element is an AMF, and the second network element is an SMF. Usually, an AMF whose service scope is a province may invoke more SMFs than an SMF whose service scope is a city or a district. If a signaling storm occurs in the first network element, the third network element may be expected to select an appropriate second network element from a plurality of second network elements serving the first network element. In this case, the first message may further include attribute information of the first network element. Correspondingly, the third network element may perform a subsequent operation based on the attribute information of the first network element. For example, the second network element finally recommended by the third network element to the first network element is a second network element that matches the service scope of the first network element.

Optionally, the first message does not include the information about the first network element, and in this case, the third network element may request the information about the first network element from another network element. For example, the third network element may request the information about the first network element from a UDM network element.

**Information B** is identification information of at least one candidate network element, for example, an ID of the at least one candidate network element.

The at least one candidate network element is at least one second network element that the first network element expects the third network element to recommend, and each second network element may serve the first network element. In a possible scenario, the first network element knows the at least one second network element serving the first network element. When a signaling storm occurs or is about to occur in the first network element, the first network element may autonomously determine a specific second network element or specific second network elements to be preferentially selected/invoked in the at least one second network element. The specific one or more second network elements may be considered as candidate network elements serving the first network element. In this case, the first network element expects the third network element to preferentially recommend the candidate network element. Correspondingly, the first message includes the identification information of the at least one candidate network element, and the third network element may select one or more network elements from the at least one candidate network element and recommend the one or more network elements to the first network element. When the third network element recommends the second network element to the first network element, a network element other than the at least one candidate network element does not need to be considered, and naturally, information related to a second network element other than the at least one candidate network element does not need to be collected, to reduce obtained information about unnecessary network elements and reduce processing complexity.

**Information C** is information about the at least one candidate network element, where the information about each candidate network element indicates at least one of a type, a service scope, and network slice information of the candidate network element.

The first message may include the information about at least one candidate network element, and the first network element may also notify the third network element of the information about the at least one candidate network element. The third network element may obtain the at least one candidate network element from another network element based on the information about the at least one candidate network element.

For example, an NRF network element knows information about the second network element serving the first network element. Therefore, the third network element may request the NRF network element to obtain the at least one candidate network element. For example, the third network element sends a second message to the NRF network element, where the second message may include the information about the at least one candidate network element, and is used to request to obtain the at least one candidate network element. In response to the second message, the NRF network element determines the at least one candidate network element that matches the information about the at least one candidate network element. Then, the NRF network element sends at least one piece of identification information to the third network element, where one piece of identification information corresponds to one candidate network element. A specific implementation in which the NRF network element sends the at least one piece of identification information is not limited in this embodiment of this application. For example, the NRF network element may send a first list, where the first list includes the at least one piece of identification information.

For another example, another first network element (for example, a first network element B) that belongs to a same set as the first network element (for example, a first network element A) that sends the first message also knows specific second network elements that serve the first network element A. In this case, the third network element may send a second message to the first network element B, where the second message may include the information about the at least one candidate network element, and is used to request to obtain the at least one candidate network element. In response to the second message, the first network element B determines the at least one candidate network element that matches the information about the at least one candidate network element, and sends at least one piece of identification information to the third network element, where one piece of identification information corresponds to one candidate network element. It may be understood that the first network element A and a second network element B correspond to a same set (Set) ID. A specific implementation in which the second network element B sends the at least one piece of identification information is not limited in this embodiment of this application. For example, the second network element B may send a first list, where the first list includes the at least one piece of identification information.

The information A to the information C included in the first message are merely examples. In some embodiments, the first message may further include other information, for example, information related to the terminal device. For example, the first message may further include an ID of the terminal device and a DNN/S-NSSAI corresponding to the terminal device.

In some embodiments, the first service includes the registration service of the terminal device. In addition to carrying the recommendation ID, the first message may carry the information A and the information related to the terminal device, for example, the ID of the terminal device and the corresponding DNN/S-NSSAI.

S202: The third network element obtains first information.

The third network element receives the first message, and may send, to the first network element, a response message in response to the first message, so that the first network element determines whether the first message is successfully sent.

The third network element receives the first message, and may obtain, based on the first message, information related to at least one network element including the first network element, to recommend an appropriate policy to the first network element. The at least one network element is related to the first service, and the at least one network element varies based on the first service. For example, the first service includes that the first network element invokes the service of the second network element, and the at least one network element includes at least one candidate network element serving as the second network element.

For ease of description, the information related to the at least one network element is referred to as statistical information of the at least one network element. The statistical information of the at least one network element may be used to analyze or predict an amount of signaling exchanged by each network element currently and/or in the future, and the third network element may obtain, based on the statistical information, a better policy for preventing or mitigating a signaling storm. Content included in the statistical information of the at least one network element is not limited in this embodiment of this application. For example, the statistical information of the at least one network element includes one or more of the following: a rate and/or a frequency of the at least one network element invoking the service in a first duration, prediction information of a rate and/or a frequency of the at least one network element being invoked in the first duration, and first time information. The first time information may indicate the first duration. It may be understood that, prediction information of a rate and/or a frequency of a network element being invoked in a period of time may be used to predict an amount of signaling that needs to be exchanged by the network element in the period of time. Similarly, a rate and/or a frequency of invoking a service in a period of time may represent an amount of signaling exchanged by the network element in the period of time.

That the third network element obtains the first information includes: The third network element sends a third message to a data analytics network element, where the third message includes an analytics ID, to indicate an analytics service requested by the third network element. For example, the analytics service is a service used to request to obtain the first information. The data analytics network element may be an NWDAF or an AnLF in an NWDAF. If the third network element is an ReLF network element, the third network element may send the third message to the AnLF in the NWDAF network element. The AnLF receives the third message, may obtain/collect original data information from a plurality of data sources, determine the first information based on the obtained/collected original data information, and send the first information to the third network element.

The plurality of data sources include a plurality of devices in a network, for example, include a network management system and at least one core network element (for example, an AMF, an SMF, a UPF, or a PCF). The network system includes but is not limited to an OAM/MDAF. When the plurality of data sources include the network system, the original data information may indicate one or more of the following: load information, signaling storm prediction information, or a device-level flow control policy of at least one of the data sources. Load information of each data source includes, for example, load of the data source, a quantity of served terminals, and a quantity of ongoing sessions. The signaling storm prediction information includes, for example, a probability of occurrence of a signaling storm, severity of the signaling storm, and the like. The device-level flow control policy is also referred to as a network element-level flow control policy.

When the plurality of data sources include a core network element, for example, the plurality of data sources include a first core network element, original data information of the first core network element may indicate one or more of the following: one or more of a rate, a success rate, or a failure rate of the first core network element invoking a service; one or more of a rate, a success rate, or a failure rate of a service of the first core network element being invoked; a service type of the first core network element and/or a proportion of the service type of the first core network element in a plurality of service types; load and a status of the first core network element; or behavior information of a terminal device related to the first core network element. It should be noted that, in this embodiment of this application, that the core network element invokes the service includes that the core network element exchanges signaling through non-service-based interfaces N2 and N4. The service type of the first core network element includes a type (for example, initial/mobility/periodic/update/emergency) of a registration service of the first core network element.

After collecting the original data information of the plurality of data sources, the AnLF may determine the statistical information of the at least one network element by performing analysis based on the original data information or performing prediction based on the original data information. Optionally, the AnLF may further predict, based on the original data information, whether a signaling storm occurs or will occur in the first network element or another network element. The AnLF sends the first information to the third network element in response to the third message, where the first information includes the statistical information of the at least one network element. Optionally, the first information may further include the signaling storm prediction information and/or the analytics ID (for example, the analytics ID carried in the third message) corresponding to the first information. The signaling storm prediction information may indicate whether there is a signaling storm or severity of the signaling storm, and may assist the third network element in recommending an appropriate policy to the first network element. For example, the signaling storm prediction information may include a probability of occurrence of the signaling storm and a level of the signaling storm.

When the third network element is an apparatus in which an ReLF and an AnLF are co-located, the third network element may obtain/collect the original data information from the plurality of data sources, and determine the first information based on the obtained/collected original data information. Alternatively, the third network element is an ReLF in an NWDAF, and the ReLF is independent of an AnLF. The third network element may obtain the first information from the AnLF. For details, refer to the foregoing related content. Details are not described herein again.

S203: The third network element sends a first policy to the first network element based on the statistical information of the at least one network element.

After obtaining the statistical information of the at least one network element, the third network element may generate the first policy, and send the first policy to the first network element. The first policy includes the policy corresponding to the first service. For example, the first service includes invoking the service of the second network element, and the third network element may recommend the second network element to the first network element from the at least one candidate network element based on the statistical information of the at least one network element. The first policy may be used to prevent or mitigate a signaling storm of the first network element. The first network element receives the first policy, and may determine, based on an actual situation, whether to execute the first policy. For example, the first information includes the signaling storm prediction information, and the signaling storm prediction information indicates that a probability of occurrence of the signaling storm is extremely low, or even the signaling storm will not occur. The first network element may not execute the first policy, to reduce impact on normal services of the first network element. For another example, the first information includes the signaling storm prediction information, and the signaling storm prediction information indicates that the signaling storm is severe. To mitigate the signaling storm, the first network element executes the first policy.

The first policy varies based on the first service. For example, the first service includes invoking the service of the second network element, and the first policy includes one or more of the following: a policy for selecting the second network element, a policy for invoking the service of the second network element, or a policy for a service of the first network element being invoked. For example, the first network element is an AMF, and second network elements that can serve the AMF include an SMF 1 to an SMF 5. The third network element may recommend, to the AMF, the SMF 2 and the SMF 3 that serve the AMF. Alternatively, the third network element may recommend the SMF 2 and the SMF 3 to the AMF, and recommend a policy for invoking services of the SMF 2 and the SMF 3. The AMF performs a corresponding operation according to the first policy. For example, the AMF does not invoke the SMF 1, the SMF 4, and the SMF 5, so that exchanged signaling can be reduced, thereby preventing or mitigating a signaling storm.

For another example, the first service includes the registration service of the terminal device, and the first policy includes one or more of the following: a time interval at which the terminal device re-attempts to register, and a policy for a service of the first network element being invoked. The time interval at which the terminal device re-attempts to register is used as a registration policy of the terminal device. The registration policy of the terminal device is not limited in this embodiment of this application. For example, the registration policy of the terminal device includes that a quantity of terminal devices allowed to register within a period of time or a quantity of registration requests allowed to be processed within a period of time does not exceed a value. The period of time may be (pre)configured, and the quantity of terminal devices may also be (pre)configured. For another example, the registration policy of the terminal device includes a quantity of terminal devices allowed to register within specified time. For example, the registration policy of the terminal device includes that A registration requests of the terminal device are allowed to be processed after a moment xx; or the registration policy of the terminal device includes that B registration requests of the terminal device are allowed to be processed from a moment xx to a moment yy.

The first network element may invoke a service or process an invoked service according to the first policy. For example, the first network element processes the registration request from the terminal device according to the registration policy of the terminal device. For example, the time interval at which the terminal device re-attempts to register is 1s, and if a time interval between the first network element receiving a registration request from the terminal device again and receiving a registration request from the terminal device last time does not exceed 1s, the first network element rejects to process the received registration request.

Optionally, if the first service includes the registration service of the terminal device, the third network element may send, to the terminal device, a policy related to the terminal device. For example, the third network element sends registration policy information to the terminal device, where the registration policy information includes the time interval at which the terminal device re-attempts to register. Alternatively, if the first service includes the registration service of the terminal device, the first network element may send, to the terminal device, a policy related to the terminal device. For example, the first network element sends registration policy information to the terminal device via an access network device.

Optionally, the first network element may alternatively adjust the registration policy of the terminal device, and feed back an adjusted registration policy to the terminal device. For example, the foregoing example is still used. When the first network element rejects the registration request of the terminal device, the first network element may further indicate, to the terminal device, delay time for initiating a registration request next time. The first network element may include the delay time in a response message for rejecting the registration request of the terminal device. It may be understood that there are a plurality of terminal devices, and if the first network element creates delay time for respective registration requests of the plurality of terminal devices, the delay time shall comply with the registration policy that is of the terminal device and recommended by the third network element. For example, a quantity of registration requests processed by the first network element in a period of time does not exceed a value.

In the foregoing communication method 200, the statistical information of the at least one network element is collected at a granularity of service and/or business, and services of the network elements can be sensed. Therefore, recommended policies vary based on different signaling overheads caused by different services. Compared with a signaling-level signaling storm control policy, this communication method can mitigate/prevent signaling storms in time, thereby improving efficiency of mitigating the signaling storms.

To better understand the communication method 200 provided in this embodiment of this application, the following describes a specific procedure of the communication method 200 by using specific examples (that is, Example 1 and Example 2).

**Example** 1: The first service is that the first network element invokes the service of the second network element, the first network element is a first AMF, the second network element is an SMF, and the third network element is an ReLF.

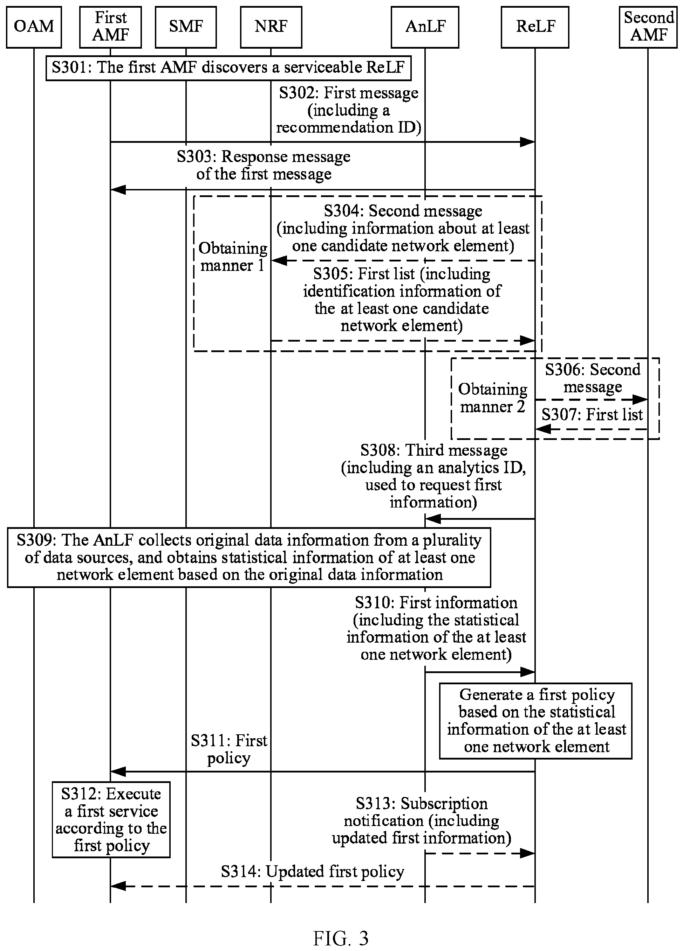

FIG. 3 is a schematic flowchart of a communication method 300 according to an embodiment of this application. The communication method 300 includes the following steps.

S301: The first AMF discovers a serviceable ReLF.

The first AMF may send a subscription request to an NRF, and correspondingly, the NRF receives the subscription request from the first AMF. The subscription request is used to request an ReLF that can serve the first AMF, or the subscription request is used to request a network function that has a recommendation logical function. The subscription request may include identification information, and the identification information indicates the recommendation logical function. The NRF receives the subscription request, queries for the network function having the recommendation logical function, and sends feedback to the first AMF. For example, an ReLF is an independent entity. If the NRF finds that an ReLF can serve the first AMF, the NRF may feed back an ID of the ReLF to the first AMF. For another example, an ReLF is a function module in an NWDAF. If the NRF finds that an NWDAF can serve the first AMF, the NRF may feed back an ID of the NWDAF to the first AMF. For another example, an AnLF is co-located with an ReLF, and is still referred to as an AnLF after co-location. In this case, if the NRF finds that an AnLF may serve the first AMF, and the AnLF has an ReLF, the NRF may feed back an ID of the AnLF to the first AMF. In Example 1, that the NRF feeds back the ID of the ReLF to the first AMF is used as an example.

S302: The first AMF sends a first message to the ReLF, and correspondingly, the ReLF receives the first message.

For content included in the first message, refer to related content in S201. Details are not described herein again.

S303: The ReLF sends a response message of the first message to the first AMF.

When the first message does not include identification information of at least one candidate network element, S304 and S305 (that is, an obtaining manner 1 in FIG. 3) are performed after S303, or S306 and S307 (that is, an obtaining manner 2 in FIG. 3) are performed after S303. When the first message includes identification information of at least one candidate network element, S304 and S305 and S306 and S307 do not need to be performed. Therefore, dashed lines are used for illustration in FIG. 3.

S304: The ReLF sends a second message to the NRF, and correspondingly, the NRF receives the second message.

The second message may include information about the at least one candidate network element, and is used to request to obtain the at least one candidate network element. In response to the second message, the NRF network element determines the at least one candidate network element that matches the information about the at least one candidate network element.

S305: The NRF sends a first list to the ReLF, where the first list includes the identification information of the at least one candidate network element.

S306: The ReLF sends a second message to a second AMF in an AMF set, and correspondingly, another AMF receives the second message.

For content carried in the second message, refer to related content in S304. Details are not described herein again.

S307: The second AMF sends a first list to the ReLF, where the first list includes the identification information of the at least one candidate network element.

S308: The ReLF sends a third message to the AnLF, and correspondingly, the AnLF receives the third message.

The third message may include an analytics ID, and is used to request first information. For details, refer to related content in the foregoing communication method 200. Details are not described herein again.

S309: The AnLF collects original data information from a plurality of data sources, and obtains statistical information of at least one network element based on the original data information.

The plurality of data sources may include a network management system, or may include at least one core network element. The AnLF can collect the corresponding original data information from the data sources. For example, the AnLF may collect, from the network management system, load information, signaling storm prediction information, or a device-level flow control policy of at least one of the data sources. For another example, the AnLF may collect the following from a first core network element: one or more of a rate, a success rate, or a failure rate of the first core network element invoking a service; one or more of a rate, a success rate, or a failure rate of a service of the first core network element being invoked; a service type of the first core network element and/or a proportion of the service type of the first core network element in a plurality of service types; load and a status of the first core network element; or behavior information of a terminal device related to the first core network element.

S310: The AnLF sends the first information to the ReLF, and correspondingly, the ReLF receives the first information from the AnLF.

The first information includes the statistical information of the at least one network element, and the at least one network element includes the first network element and the second network element. Optionally, the first information may further include the signaling storm prediction information and/or the analytics ID.

S311: The ReLF sends a first policy to the first AMF, and correspondingly, the first AMF receives the first policy from the ReLF.

The ReLF determines the first policy based on the statistical information of the at least one network element or the first information, and sends the first policy to the first AMF. The first policy includes, for example, a policy for the first AMF to select an SMF, a policy for the first AMF to invoke a service of the SMF, and a policy for a service of the first AMF being invoked.

S312: The first AMF executes the first service according to the first policy.

For example, the first AMF selects a first SMF according to the policy that is for the first AMF to select the SMF and in the first policy. For another example, the SMF selected by the first AMF is the first SMF, and the first AMF invokes a service of the first SMF according to the policy that is for the first AMF to invoke the service of the SMF and in the first policy.

Optionally, after S312, S313 and S314 may be further performed, and are shown by using dashed lines in FIG. 3.

S313: The AnLF sends a subscription notification to the ReLF, where the subscription notification includes updated first information.

S314: The ReLF generates a new first policy based on the updated first information, and sends the updated first policy to the first AMF.

Each data source may periodically send original data information to the AnLF, and the AnLF may re-determine first information based on updated original data information. To enable the policy recommended by the ReLF to be used to prevent or mitigate a signaling storm in time, the AnLF may send the updated first information to the ReLF, and the ReLF updates the first policy based on the updated first information. The updated first policy is determined based on the latest original data information collected by the AnLF. Therefore, the updated first policy can be used to better prevent or mitigate the signaling storm.

In the communication method 300, the original data information collected by the AnLF is associated with services of the first AMF and the SMF, and correspondingly, the first policy is a service-level policy. In this way, the first policy can be used to prevent or mitigate the signaling storm of the first AMF in time, thereby reducing network exceptions, and mitigating impact on normal services.

**Example** 2: The first service is a registration service of a terminal device and the first network element is an AMF.

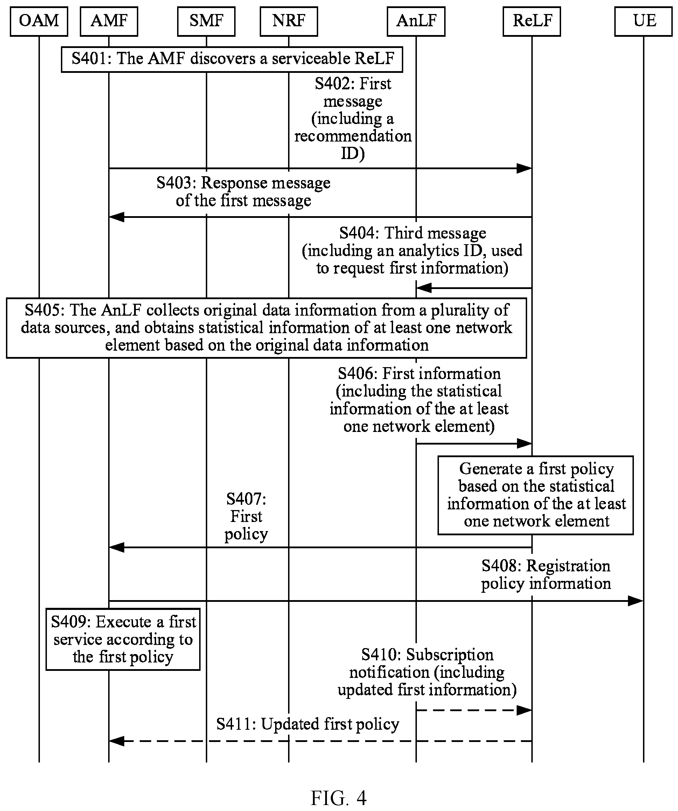

FIG. 4 is a schematic flowchart of a communication method 400 according to an embodiment of this application. The communication method 400 includes the following steps.

S401: An AMF discovers a serviceable ReLF. For details, refer to S301. Details are not described again.

S402: The AMF sends a first message to the ReLF, and correspondingly, the ReLF receives the first message.

The first message may include a recommendation ID. For details, refer to related content in S201. For example, the first message may further include attribute information of the AMF and information related to the terminal device. Details are not described herein.

S403: The ReLF sends a response message of the first message to the AMF.

S404: The ReLF sends a third message to an AnLF, and correspondingly, the AnLF receives the third message.

The third message may include an analytics ID, and is used to request first information. For details, refer to related content in the foregoing communication method 200. Details are not described herein again.

S405: The AnLF collects original data information from a plurality of data sources, and obtains statistical information of at least one network element based on the original data information. For details, refer to related content in S309. Details are not described herein again.

S406: The AnLF sends the first information to the ReLF, and correspondingly, the ReLF receives the first information from the AnLF. For details, refer to S310. Details are not described again.

S407: The ReLF sends a first policy to the AMF, and correspondingly, the AMF receives the first policy from the ReLF.

The ReLF determines the first policy based on the statistical information of the at least one network element or the first information, and sends the first policy to the AMF. For example, the first policy includes a time interval at which the terminal device re-attempts to register and a policy for a service of the AMF being invoked.

S408: The AMF sends registration policy information to the terminal device.

The registration policy information includes the time interval at which the terminal device re-attempts to register. The AMF may send the registration policy information to the terminal device via another device. For example, the AMF may send the registration policy information to the terminal device via an access network device. Optionally, the AMF may instruct, via an NEF and an AF, the terminal device to perform re-registration.

S409: The AMF executes the first service according to the first policy.

For example, the time interval at which the terminal device re-attempts to register is 1s, and the AMF determines, according to the first policy, that when a time interval between receiving a registration request from the terminal device again and receiving a registration request from the terminal device last time does not exceed 1s, the AMF rejects to process the received registration request.

Optionally, after S409, S410 and S411 may be further performed, and are shown by using dashed lines in FIG. 4.

S410: The AnLF sends a subscription notification to the ReLF, where the subscription notification includes updated first information.

S411: The ReLF generates a new first policy based on the updated first information, and sends the updated first policy to the first AMF.

Each data source may periodically send original data information to the AnLF, and the AnLF may re-determine first information based on updated original data information. To enable the policy recommended by the ReLF to be used to prevent or mitigate a signaling storm in time, the AnLF may send the updated first information to the ReLF, and the ReLF updates the first policy based on the updated first information. The updated first policy is determined based on the latest original data information collected by the AnLF. Therefore, the updated first policy can be used to better prevent or mitigate the signaling storm.

According to the communication method 400, a signaling storm caused by a plurality of terminal devices initiating registration requests in a centralized manner can be prevented or mitigated, thereby reducing network exceptions and mitigating impact on normal services.

In the foregoing embodiments provided in this application, the methods provided in the embodiments of this application are described by using an example in which the first network element and the third network element perform the methods. In this application, the embodiments may be independently implemented or may be implemented in combination based on some internal relationships. In each embodiment, different implementations may be implemented in combination or independently. To implement functions in the methods provided in embodiments of this application, steps performed by the network elements may be implemented by different function entities that form the network elements. To implement the functions in the methods provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

Based on a same inventive concept as the method embodiments, an embodiment of this application provides a communication apparatus. The following describes, with reference to the accompanying drawings, communication apparatuses configured to implement the foregoing methods in embodiments of this application. All the foregoing content may be used in the following embodiments. Repeated content is not described again.

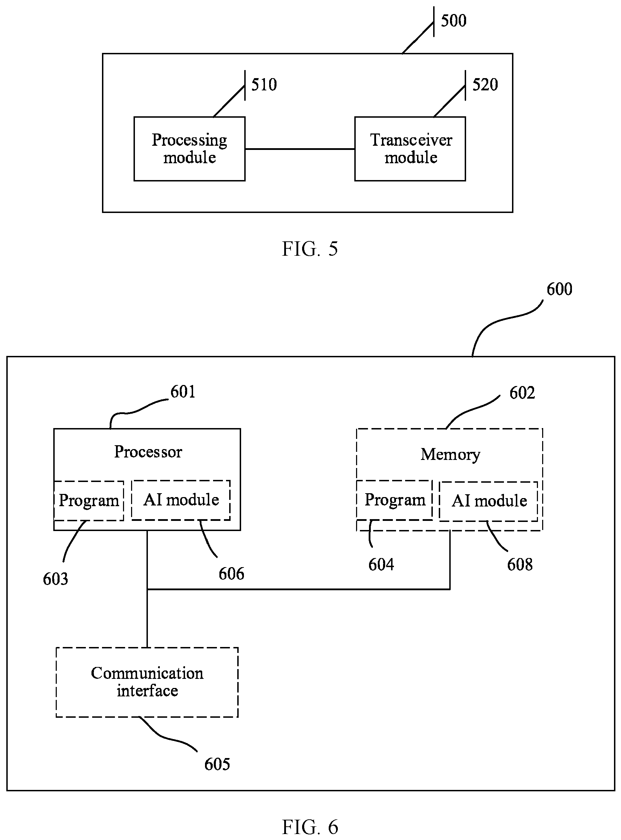

FIG. 5 is a block diagram of a communication apparatus 500 according to an embodiment of this application. The communication apparatus 500 may be any network element in the first network element to the fourth network element in the foregoing embodiments. For example, the communication apparatus 500 may be the first network element, or the communication apparatus 500 is a chip (system) in the first network element, or the communication apparatus 500 is a software module of the first network element. The communication apparatus 500 may correspondingly implement functions or steps implemented by the first network element in the foregoing method embodiments. For another example, the communication apparatus 500 may be the foregoing third network element, and the third network element may be an NWDAF network element having an ReLF and an AnLF, where the ReLF and the AnLF are independent or the ReLF and the AnLF are co-located; or the third network element is an NWDAF having an ReLF. Alternatively, the communication apparatus 500 is a chip (system) in the third network element; or the communication apparatus 500 is a software module of the third network element. The communication apparatus 500 may correspondingly implement functions or steps implemented by the third network element in the foregoing method embodiments. The communication apparatus 500 may correspondingly implement functions or steps implemented by the third network element in the foregoing method embodiments.

The communication apparatus 500 may include a processing module 510 and a transceiver module 520. Optionally, a storage module may be further included. The storage module may be configured to store instructions (code or a program) and/or data. The storage module may be, for example, a memory. The processing module 510 and the transceiver module 520 may be coupled to the storage module. For example, the processing module 510 may read the instructions (the code or the program) and/or the data in the storage module, to implement a corresponding method. When the communication apparatus 500 is a chip in the first network element or the third network element, the storage module may be a storage module in the chip, for example, a register or a cache. For example, the storage module may alternatively be a storage module that is in a terminal device or a network device and located outside the chip, for example, a read-only memory (read-only memory, ROM), another type of static storage device that can store static information and instructions, or a random access memory (random access memory, RAM). The foregoing units may be independently disposed, or may be partially or completely integrated.

The processing module 510 may be a processor or a controller, for example, may be a general purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. The processor may alternatively be a combination of processors implementing a computing function, for example, a combination of one or more microprocessors, or a combination of a DSP and a microprocessor. The transceiver module 520 is a transceiver, an interface circuit, a bus, a pin, or another possible communication interface, and is configured to receive a signal from another apparatus. For example, when the apparatus is implemented in a form of a chip, the transceiver module 520 is an interface circuit used by the chip to receive a signal from another chip or apparatus, or is an interface circuit used by the chip to send a signal to another chip or apparatus.

In an implementation, the communication apparatus 500 can correspondingly implement behavior and functions of the third network element in the foregoing method embodiments. The communication apparatus 500 may be the third network element, or may be a component (for example, a chip or a circuit) used in the third network element, or may be a chip or a chip group in the third network element or a part that is of the chip and configured to perform a related method function, or may be a software module that can implement the method performed by the third network element in the foregoing methods (for example, any one of the communication method 200 to the communication method 400). This is not limited. For details, refer to related content in the foregoing method embodiments. Details are not described herein again.

For example, the transceiver module 520 is configured to receive a first message from a first network element, where the first message is used to request to recommend a policy corresponding to a first service. The processing module 510 is configured to obtain first information, where the first information includes statistical information of at least one network element, the statistical information includes information about the at least one network element invoking a service and/or information about a service of the at least one network element being invoked, and the at least one network element includes the first network element. The processing module 510 is further configured to trigger, based on the statistical information of the at least one network element, the transceiver module 520 to send a first policy to the first network element, where the first policy includes the policy corresponding to the first service.

In an optional implementation, the first service includes invoking a service of a second network element, and the processing module 510 is further configured to obtain at least one candidate network element serving the first service. The at least one candidate network element includes the second network element, and the at least one network element includes the at least one candidate network element.

In an optional implementation, the first message includes information about the at least one candidate network element, and the information about the at least one candidate network element indicates at least one of a type, a service scope, and slice information of the at least one candidate network element. The transceiver module 520 is specifically configured to: send a second message, and receive at least one piece of identification information. The second message is used to request to obtain the at least one candidate network element. The at least one piece of identification information is in one-to-one correspondence with the at least one candidate network element, and the at least one piece of identification information is determined based on the information about the at least one candidate network element.

In an optional implementation, the transceiver module 520 is specifically configured to send a third message to a data analytics network element, where the third message includes an analytics ID, and is used to request to obtain the first information.

In an optional implementation, the statistical information of the at least one network element includes one or more of the following:
a rate and/or a frequency of the at least one network element invoking the service in a first duration;
prediction information of a rate and/or a frequency of the at least one network element being invoked in the first duration; or
first time information, indicating the first duration.

In an optional implementation, the first information further includes signaling storm prediction information and/or the analytics ID corresponding to the first information.

In an optional implementation, the first service is a registration service of a terminal device, and the first policy includes one or more of the following: a time interval at which the terminal device re-attempts to register, or a policy for a service of the first network element being invoked.

In an optional implementation, the first service includes invoking the service of the second network element, and the first policy includes one or more of the following: a policy for selecting the second network element, a policy for invoking the service of the second network element, or a policy for a service of the first network element being invoked.

In an optional implementation, the first message includes a recommendation identifier, and the recommendation identifier is an ID of a service requested to be recommended.

In an optional implementation, the first message further includes a service scope of the first network element, identification information of the first network element or identification information of a set to which the first network element belongs, and network slice information of the first network element.

In an optional implementation, the first message further includes the identification information of the at least one candidate network element.

In an implementation, the communication apparatus 500 can correspondingly implement behavior and functions of the first network element in the foregoing method embodiments. The communication apparatus 500 may be the first network element, or may be a component (for example, a chip or a circuit) used in the first network element, or may be a chip or a chip group in the first network element or a part that is of the chip and configured to perform a related method function, or may be a software module that can implement the method performed by the first network element in the foregoing methods (for example, any one of the communication method 200 to the communication method 400). This is not limited. For details, refer to related content in the foregoing method embodiments. Details are not described herein again.

For example, the transceiver module 520 is configured to send a first message to a third network element, and receive a first policy. The first message is used to request a policy corresponding to a first service. The first policy includes the policy corresponding to the first service, the first policy is determined based on statistical information of at least one network element, and the at least one network element is related to the first service. The statistical information of the at least one network element includes information about the at least one network element invoking a service and/or information about a service of the at least one network element being invoked.

In an optional implementation, the first message includes a recommendation identifier, and the recommendation identifier is an ID of a service requested to be recommended.

In an optional implementation, the first message further includes a service scope of the first network element, identification information of the first network element or identification information of a set to which the first network element belongs, and network slice information of the first network element.

In an optional implementation, the first service includes invoking a service of a second network element, and the first message further includes information about at least one candidate network element, where the information about the at least one candidate network element indicates at least one of a type, a service scope, and slice information of the at least one candidate network element. The at least one candidate network element includes the second network element.

In an optional implementation, the first message further includes identification information of the at least one candidate network element.

In an optional implementation, the first service includes invoking the service of the second network element, and the first policy includes one or more of the following: a policy for selecting the second network element, a policy for invoking the service of the second network element, or a policy for a service of the first network element being invoked.

In an optional implementation, the first service includes a registration service of a terminal device, and the first policy includes one or more of the following: a time interval at which the terminal device re-attempts to register, or a policy for a service of the first network element being invoked.

In an optional implementation, the transceiver module 520 is further configured to send registration policy information to the terminal device, where the registration policy information indicates the time interval at which the terminal device re-attempts to register.

In an implementation, the communication apparatus 500 can correspondingly implement behavior and functions of the fourth network element in the foregoing method embodiments. The communication apparatus 500 may be the fourth network element, or may be a component (for example, a chip or a circuit) used in the fourth network element, or may be a chip or a chip group in the fourth network element or a part that is of the chip and configured to perform a related method function, or may be a software module that can implement the method performed by the fourth network element in the foregoing methods (for example, any one of the communication method 200 to the communication method 400). This is not limited. For details, refer to related content in the foregoing method embodiments. Details are not described herein again.

For example, the transceiver module 520 is configured to receive a third message, where the third message is used to request first information, the first information includes statistical information of at least one network element, and the statistical information includes information about the at least one network element invoking a service and/or information about a service of the at least one network element being invoked. The processing module 510 is configured to obtain original data information from a plurality of data sources, and the transceiver module 520 is further configured to send the first information. The plurality of data sources include a network management system, and the original data information indicates one or more of the following: load information, signaling storm prediction information, or a device-level flow control policy of at least one of the data sources. The plurality of data sources include a first core network element, and the original data information indicates one or more of the following: one or more of a rate, a success rate, or a failure rate of the first core network element invoking a service; one or more of a rate, a success rate, or a failure rate of a service of the first core network element being invoked; a service type of the first core network element and/or a proportion of the service type of the first core network element in a plurality of service types; load and a status of the first core network element; or behavior information of a terminal device.

When the communication apparatus 500 is a chip-type apparatus or a circuit, the transceiver module may be an input/output circuit and/or a communication interface, and the processing module is an integrated processor, a microprocessor, or an integrated circuit.

FIG. 6 is a block diagram of a communication apparatus 600 according to an embodiment of this application. The communication apparatus 600 may be the first network element, the third network element, or the fourth network element in the foregoing embodiments, or a chip (system) in the first network element, the third network element, or the fourth network element. In this embodiment of this application, the chip system may include a chip, or may include a chip and another discrete device. For a specific function, refer to descriptions of the foregoing method embodiments.

The communication apparatus 600 includes one or more processors 601, configured to implement or support the communication apparatus 600 in implementing functions of the first network element, the third network element, or the fourth network element in the methods provided in embodiments of this application. For details, refer to detailed descriptions in the method examples. Details are not described herein again. The processor 601 may also be referred to as a processing unit or a processing module, and may implement a specific control function. The processor 601 may be a general-purpose processor, a dedicated processor, or the like. For example, the processor 601 includes a central processing unit, an application processor, a modem processor, a graphics processor, an image signal processor, a digital signal processor, a video codec processor, a controller, a memory, and/or a neural network processor. The central processing unit may be configured to: control the communication apparatus 600 (for example, a network device or a terminal device), execute a software program, and/or process data. Different processors may be independent devices, or may be integrated into one or more processors, for example, integrated into one or more application-specific integrated circuits.

In a design, the processor 601 may include a program 603 (may sometimes also be referred to as code or instructions). The program 603 may be run on the processor 601, to cause the communication apparatus 600 to perform the methods described in the foregoing embodiments. In another possible design, the communication apparatus 600 includes a circuit (not shown in FIG. 6), and the circuit is configured to implement functions of the first network element, the third network element, or the fourth network element in the foregoing embodiments.

In a design, the communication apparatus 600 may include one or more memories 602, and a program 604 (may sometimes also be referred to as code or instructions) is stored in the one or more memories 602. The program 604 may be run on the processor 601, to cause the communication apparatus 600 to perform the methods described in the foregoing method embodiments.

In a design, the processor 601 and/or the memory 602 may include an artificial intelligence (artificial intelligence, AI) module 606 and an AI module 608. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 601 and/or the memory 602 may further store data. The processor and the memory may be separately disposed, or may be integrated together.

In a possible design, the communication apparatus 600 may further include a communication interface 605. The processor 601 may sometimes also be referred to as a processing unit, and controls the communication apparatus 600. The communication interface 605 may sometimes also be referred to as a transceiver unit, a transceiver machine, a transceiver circuit, a transceiver, or the like, and is configured to implement a transceiver function of the communication apparatus 600.

An embodiment of this application further provides a communication system. Specifically, the communication system includes at least one first network element, at least one second network element, and at least one third network element. Optionally, the communication system may further include at least one fourth network element and a terminal device. The first network element, the second network element, and the third network element are network elements configured to implement functions related to any one of the communication method 200 to the communication method 400. For details, refer to related descriptions in the foregoing method embodiments. Details are not described herein again.

An embodiment of this application further provides a computer-readable storage medium, including instructions. When the instructions are run on a computer, the computer is caused to perform the method performed by any one of the first network element, the third network element, or the fourth network element in any one of the communication method 200 to the communication method 400.

An embodiment of this application further provides a computer program product, including computer program code. When the computer program code is executed, a computer is caused to perform the method performed by any one of the first network element, the third network element, or the fourth network element in any one of the communication method 200 to the communication method 400.

An embodiment of this application provides a chip system. The chip system includes a processor, and may further include a memory, configured to implement functions of any one of the first network element, the third network element, or the fourth network element in any one of the foregoing method 200 to the communication method 400. The chip system may include a chip, or may include a chip and another discrete device.

To implement the functions of the communication apparatuses in FIG. 5 and FIG. 6, an embodiment of this application further provides a chip, including a processor, configured to support the communication apparatus in implementing functions of any one of the first network element, the third network element, or the fourth network element in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with illustrative logical blocks (illustrative logical block) and steps (step) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in a form of a software function unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

It is clear that a person skilled in the art can make various modifications and variations to this application without departing from the scope of this application. In this way, this application is intended to cover these modifications and variations of this application provided that they fall within the scope of protection of the claims of this application and their equivalent technologies.

## Claims

1. A communication method, comprising:
receiving a first message from a first network element, wherein the first message is used to request to recommend a policy corresponding to a first service;
obtaining first information, wherein the first information comprises statistical information of at least one network element, the statistical information comprises information about the at least one network element invoking a service and/or information about a service of the at least one network element being invoked, and the at least one network element comprises the first network element; and
sending a first policy to the first network element based on the statistical information of the at least one network element, wherein the first policy comprises the policy corresponding to the first service.

2. The method according to claim 1, wherein the first service comprises invoking a service of a second network element, and the method further comprises:
obtaining at least one candidate network element serving the first service, wherein the at least one candidate network element comprises the second network element, and the at least one network element comprises the at least one candidate network element.

3. The method according to claim 2, wherein the first message comprises information about the at least one candidate network element, the information about the at least one candidate network element indicates at least one of a type, a service scope, and slice information of the at least one candidate network element, and the obtaining the at least one candidate network element comprises:
sending a second message, wherein the second message comprises the information about the at least one candidate network element; and
receiving at least one piece of identification information, wherein the at least one piece of identification information is in one-to-one correspondence with the at least one candidate network element, and the at least one piece of identification information is determined based on the information about the at least one candidate network element.

4. The method according to any one of claims 1 to 3, wherein the obtaining the first information comprises:
sending a third message to a data analytics network element, wherein the third message comprises an analytics identifier ID, and is used to request to obtain the first information.

5. The method according to any one of claims 1 to 4, wherein the statistical information of the at least one network element comprises one or more of the following:
a rate and/or a frequency of the at least one network element invoking the service in a first duration;
prediction information of a rate and/or a frequency of the at least one network element being invoked in the first duration; or
first time information, indicating the first duration.

6. The method according to claim 5, wherein the first information further comprises one or more of the following:
signaling storm prediction information; and
the analytics ID corresponding to the first information.

7. The method according to any one of claims 1 to 6, wherein the first service comprises a registration service of a terminal device, and the first policy comprises one or more of the following:
a time interval at which the terminal device re-attempts to register; and
a policy for a service of the first network element being invoked.

8. The method according to any one of claims 1 to 6, wherein the first service comprises invoking the service of the second network element, and the first policy comprises one or more of the following:
a policy for selecting the second network element;
a policy for invoking the service of the second network element; and
a policy for a service of the first network element being invoked.

9. The method according to any one of claims 1 to 8, wherein the first message comprises a recommendation identifier, and the recommendation identifier is an ID of a service requested to be recommended.

10. The method according to claim 9, wherein the first message further comprises:
a service scope of the first network element;
identification information of the first network element or identification information of a set to which the first network element belongs; and
network slice information of the first network element.

11. The method according to claim 10, wherein the first message further comprises:
the identification information of the at least one candidate network element.

12. A communication method, comprising:
sending a first message to a third network element, wherein the first message is used to request to recommend a policy corresponding to a first service; and
receiving a first policy from the third network element, wherein the first policy comprises the policy corresponding to the first service, the first policy is determined based on statistical information of at least one network element, the at least one network element is related to the first service, and the statistical information comprises information about the at least one network element invoking a service and/or information about a service of the at least one network element being invoked.

13. The method according to claim 12, wherein the first message comprises a recommendation identifier, and the recommendation identifier is an ID of a service requested to be recommended.

14. The method according to claim 13, wherein the first message further comprises:
a service scope of the first network element;
identification information of the first network element or identification information of a set to which the first network element belongs; and
network slice information of the first network element.

15. The method according to claim 14, wherein the first service comprises invoking a service of a second network element, and the first message further comprises:
information about the at least one candidate network element, wherein the information about the at least one candidate network element indicates at least one of a type, a service scope, and slice information of the at least one candidate network element, and the at least one candidate network element comprises the second network element.

16. The method according to claim 15, wherein the first message further comprises:
identification information of the at least one candidate network element.

17. The method according to any one of claims 12 to 16, wherein the first service comprises invoking the service of the second network element, and the first policy comprises one or more of the following:
a policy for selecting the second network element;
a policy for invoking the service of the second network element; and
a policy for a service of the first network element being invoked.

18. The method according to any one of claims 12 to 16, wherein the first service comprises a registration service of a terminal device, and the first policy comprises one or more of the following:
a time interval at which the terminal device re-attempts to register; and
a policy for a service of the first network element being invoked.

19. The method according to claim 18, wherein the method further comprises:
sending registration policy information to the terminal device, wherein the registration policy information indicates the time interval at which the terminal device re-attempts to register.

20. A communication method, comprising:
receiving a third message, wherein the third message is used to request first information, the first information comprises statistical information of at least one network element, and the statistical information comprises information about the at least one network element invoking a service and/or information about a service of the at least one network element being invoked; and
sending the first information based on original data information obtained from a plurality of data sources, wherein
the plurality of data sources comprise a network management system, and the original data information indicates one or more of the following: load information, signaling storm prediction information, or a device-level flow control policy of at least one of the data sources; and
the plurality of data sources comprise a first core network element, and the original data information indicates one or more of the following:
one or more of a rate, a success rate, or a failure rate of the first core network element invoking a service;
one or more of a rate, a success rate, or a failure rate of a service of the first core network element being invoked;
a service type of the first core network element and/or a proportion of the service type of the first core network element in a plurality of service types;
load and a status of the first core network element; and
behavior information of a terminal device.

21. A communication apparatus, comprising:
a transceiver module, configured to receive a first message from a first network element, wherein the first message is used to request to recommend a policy corresponding to a first service; and
a processing module, configured to obtain first information, wherein the first information comprises statistical information of at least one network element, the statistical information comprises information about the at least one network element invoking a service and/or information about a service of the at least one network element being invoked, and the at least one network element comprises the first network element, wherein
the transceiver module is further configured to send a first policy to the first network element based on the statistical information of the at least one network element, wherein the first policy comprises the policy corresponding to the first service.

22. The apparatus according to claim 21, wherein the first service comprises invoking a service of a second network element, and the processing module is further configured to:
obtain at least one candidate network element serving the first service, wherein the at least one candidate network element comprises the second network element, and the at least one network element comprises the at least one candidate network element.

23. The apparatus according to claim 22, wherein the first message comprises information about the at least one candidate network element, the information about the at least one candidate network element indicates at least one of a type, a service scope, and slice information of the at least one candidate network element, and the transceiver module is specifically configured to:
send a second message, wherein the second message comprises the information about the at least one candidate network element; and
receive at least one piece of identification information, wherein the at least one piece of identification information is in one-to-one correspondence with the at least one candidate network element, and the at least one piece of identification information is determined based on the information about the at least one candidate network element.

24. The apparatus according to any one of claims 21 to 23, wherein the transceiver module is specifically configured to:
send a third message to a data analytics network element, wherein the third message comprises an analytics identifier ID, and is used to request to obtain the first information.

25. The apparatus according to any one of claims 21 to 24, wherein the statistical information of the at least one network element comprises one or more of the following:
a rate and/or a frequency of the at least one network element invoking the service in a first duration;
prediction information of a rate and/or a frequency of the at least one network element being invoked in the first duration; or
first time information, indicating the first duration.

26. The apparatus according to claim 25, wherein the first information further comprises one or more of the following:
signaling storm prediction information; and
the analytics ID corresponding to the first information.

27. The apparatus according to any one of claims 21 to 26, wherein the first service comprises a registration service of a terminal device, and the first policy comprises one or more of the following:
a time interval at which the terminal device re-attempts to register; and
a policy for a service of the first network element being invoked.

28. The apparatus according to any one of claims 21 to 26, wherein the first service comprises invoking the service of the second network element, and the first policy comprises one or more of the following:
a policy for selecting the second network element;
a policy for invoking the service of the second network element; and
a policy for a service of the first network element being invoked.

29. The apparatus according to any one of claims 21 to 28, wherein the first message comprises a recommendation identifier, and the recommendation identifier is an ID of a service requested to be recommended.

30. The apparatus according to claim 29, wherein the first message further comprises:
a service scope of the first network element;
identification information of the first network element or identification information of a set to which the first network element belongs; and
network slice information of the first network element.

31. The apparatus according to claim 30, wherein the first message further comprises:
the identification information of the at least one candidate network element.

32. A communication apparatus, comprising:
a processing module, configured to determine a first message, wherein the first message is used to request to recommend a policy corresponding to a first service; and
a transceiver module, configured to: send the first message to a third network element, and receive a first policy from the third network element, wherein the first policy comprises the policy corresponding to the first service, the first policy is determined based on statistical information of at least one network element, the at least one network element is related to the first service, and the statistical information comprises information about the at least one network element invoking a service and/or information about a service of the at least one network element being invoked.

33. The apparatus according to claim 32, wherein the first message comprises a recommendation identifier, and the recommendation identifier is an ID of a service requested to be recommended.

34. The apparatus according to claim 33, wherein the first message further comprises:
a service scope of the first network element;
identification information of the first network element or identification information of a set to which the first network element belongs; and
network slice information of the first network element.

35. The apparatus according to claim 34, wherein the first service comprises invoking a service of a second network element, and the first message further comprises:
information about the at least one candidate network element, wherein the information about the at least one candidate network element indicates at least one of a type, a service scope, and slice information of the at least one candidate network element, and the at least one candidate network element comprises the second network element.

36. The apparatus according to claim 35, wherein the first message further comprises:
identification information of the at least one candidate network element.

37. The apparatus according to any one of claims 32 to 36, wherein the first service comprises invoking the service of the second network element, and the first policy comprises one or more of the following:
a policy for selecting the second network element;
a policy for invoking the service of the second network element; and
a policy for a service of the first network element being invoked.

38. The apparatus according to any one of claims 32 to 36, wherein the first service comprises a registration service of a terminal device, and the first policy comprises one or more of the following:
a time interval at which the terminal device re-attempts to register; and
a policy for a service of the first network element being invoked.

39. The apparatus according to claim 38, wherein the transceiver module is further configured to:
send registration policy information to the terminal device, wherein the registration policy information indicates the time interval at which the terminal device re-attempts to register.

40. A communication apparatus, comprising:
a transceiver module, configured to: receive a third message, and send first information based on original data information obtained from a plurality of data sources, wherein the third message is used to request the first information, the first information comprises statistical information of at least one network element, the statistical information comprises information about the at least one network element invoking a service and/or information about a service of the at least one network element being invoked, the plurality of data sources comprise a network management system, and the original data information indicates one or more of the following: load information, signaling storm prediction information, or a device-level flow control policy of at least one of the data sources, wherein
the plurality of data sources comprise a first core network element, and the original data information indicates one or more of the following:
one or more of a rate, a success rate, or a failure rate of the first core network element invoking a service;
one or more of a rate, a success rate, or a failure rate of a service of the first core network element being invoked;
a service type of the first core network element and/or a proportion of the service type of the first core network element in a plurality of service types;
load and a status of the first core network element; and
behavior information of a terminal device; and
a processing module, configured to determine the first information.

41. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 11; the processor is configured to execute the computer program stored in the memory, to cause the communication apparatus to perform the method according to any one of claims 12 to 19; or the processor is configured to execute the computer program stored in the memory, to cause the communication apparatus to perform the method according to claim 20.

42. A chip system, wherein the chip system comprises a processor and an interface, the processor is configured to invoke instructions from the interface and run the instructions, and when the processor executes the instructions, the method according to any one of claims 1 to 11 is implemented; when the processor executes the instructions, the method according to any one of claims 12 to 19 is implemented; or when the processor executes the instructions, the method according to claim 20 is implemented.

43. A computer-readable storage medium, wherein the computer-readable storage medium is configured to store a computer program, and when the computer program is run on a computer, the computer is caused to perform the method according to any one of claims 1 to 11; when the computer program is run on a computer, the computer is caused to perform the method according to any one of claims 12 to 19; or when the computer program is run on a computer, the computer is caused to perform the method according to claim 20.

44. A computer program product, wherein the computer program product comprises a computer program, and when the computer program is run on a computer, the computer is caused to perform the method according to any one of claims 1 to 11; when the computer program is run on a computer, the computer is caused to perform the method according to any one of claims 12 to 19; or when the computer program is run on a computer, the computer is caused to perform the method according to claim 20.
